# EUROPEAN PATENT SPECIFICATION

(11) **EP 3 557 896 B1**
(45) Date of publication and mention of the grant of the patent: **16.02.2022**
(21) Application number: 18000377.4
(22) Date of filing: 17.04.2018
(51) Int. Cl.: H04W 8/24

(54) **OVER-THE-AIR REMOTE MANAGEMENT OF NB-IOT SIM CARDS**
OTA-FERNVERWALTUNG VON NB-IOT-SIM-KARTEN
GESTION À DISTANCE PAR RADIO DE CARTES SIM NB-IDO

(43) Date of publication of application: 23.10.2019
(73) Proprietor: Giesecke+Devrient Mobile Security GmbH, 81677 München (DE)
(72) Inventor: Tea, Vui Huang, 12 061 Stockholm (SE)
(74) Representative: Giesecke + Devrient IP

(56) References cited:
- EP-A1- 2 079 220
- WO-A1-2017/084688
- CN-B- 102 695 147
- US-A1- 2009 177 800
- US-A1- 2014 220 949

## Description

The present invention is directed towards a method for updating SIM card settings, especially of Narrow Band-Internet of Things devices which are lightweight components not arranged to perform voice transmission and consequently not holding a MSISDN.

US 2009/0177800 A1 teaches a system for synchronizing data between a communication device and a server. Concepts such as Hypertext Transfer Protocol HTTP, Over-The-Air OTA and User Datagram Protocol UDP are introduced. According to this publication, especially passage [0053], the device must be addressable through a mobile number MSISDN.

US 2005/0060364 A1 teaches a method for usage in a telecommunications network that comprises a server and a wireless device.

US 8,140,062 B1 teaches monitoring and tracking wireless communication devices and their activities. This is performed using the User Datagram Protocol and Hypertext Transfer Protocol.

CN 102 695 147 B discloses a system and a method for realizing the data update of a user SIM (Subscriber Identity Module) card. The method comprises the steps as follows: after personal data is written into the SIM card by a card writing platform, successfully written card issuing information is transmitted to a card data management system via a preset card writing interface file; the card data management system writes and stores SIM card information and the card issuing information successfully written by the card writing platform; an OTA (Over The Air) platform completes the short message transmitting/receiving of the SIM card via a short message gateway, and stores registered OTA registration information and a short message central code thereof; a registered card organization and a management data update message are determined according to a card data update instruction, and the data update message is transmitted to the SIM card via the short message; and the SIM card updates the short message central code in an own data file according to received data update message. The system and he method improve convenience in use and user experience.

It is commonly known in the art to provide a telecommunications network, where a base station communicates with a user equipment, for instance according to the LTE standard. According to former application scenarios the user equipment is typically provided by means of a mobile end device such as a smartphone. Hence, a typical usage scenario of such an architecture is that a mobile device is operated by a user and the user equipment connects with a base station nearby. Upon movement of the end device, a handover may be performed from one base station to another.

Recent usage scenarios according to the so-called Internet of Things (IoT) imply that not a restricted number of mobile phones is present within the radius of a base station but in everyday life end devices are present and communicate and exchange data over the internet.

In recent years, the number of telecommunication devices has significantly increased as huge numbers of lightweight components are now connected over the internet. This leads to restrictions regarding underlying architectures as they are designed for a limited number of mobile phones. Consequently, with an increasing number of Internet-of-Things devices, resources are becoming scarce and concepts are not scaleable enough to handle such huge numbers of components.

As Internet-of-Things components typically do not require voice services, there is no need to assign them a MSISDN, which is a costly resource. This feature is supported by the network but configuring SIM cards within the device over the air is still necessary. Currently, Over-the-Air services are integrated with specific protocols such as SMSC using SMPP. Such protocols make it difficult to send short messages to the card without addressing it by MSISDN. Further protocols, like mechanisms relying on the expensive highspeed message package solution, shall be avoided. Furthermore, as Internet-of-Things devices typically comprise no appropriate configuration, update sessions performed using Short Message Services are likewise of disadvantage.

Traditionally, Over-the-Air services require Short Message Services SMS or HTTP-OTA/IP-OTA transport mechanisms. Such mechanisms shall be avoided according to the present invention as a lightweight Internet-of-Things device shall be constructed operable with low resources. Consequently, it is an object of the present invention to provide a method for updating SIM card settings of a Narrow Band Internet of Things device remotely of the air from a configuration data-providing entity, which is improved over the art such that low technical effort arises.

The object is solved according to the features of independent claims. Further advantages are provided by means of dependent claims.

Accordingly, a method for updating SIM card settings of an NB-IoT device remotely over the air is suggested comprising the steps of initiating an update session for configuration data stored on the SIM card, establishing a communication channel between a configuration data-providing entity and the SIM card, performing data exchange between the SIM card and the configuration data-providing entity for updating the configuration data over the established communication channel, wherein the communication channel is operated according to a User Datagram Protocol UDP.

The skilled person appreciates that the aforementioned method steps can be performed iteratively and/ or can be performed in a different order. Furthermore, they may comprise substeps. For instance, the step of operating the communication channel according to the User Datagram Protocol can be performed in parallel with the initiation and the establishing of the communication channel. Moreover, the step of initiating an update session and establishing a communication channel can be performed the other way round such that the update session can be accomplished using the established communication channel. Performing data exchange is performed several times in both ways, meaning from the SIM card to the configuration data-providing entity and from this entity to the SIM card. While the communication channel is established, it is operated according to a User Datagram Protocol.

The person skilled in the art furthermore appreciates that concepts like the User Datagram Protocol are commonly known but are demonstrated in a different application scenario, namely the update of SIM card settings, which is performed using Short Message Service or the like in the known art.

Each Cellular Internet of Things (CIoT) device contains a connectivity module. The connectivity module functions as the ME (Mobile Equipment) in a Cellular Internet of Things (CIoT) scenario.

Due to the nature of NB-IoT (client initiates connection with server, then waits for server to send data), the most natural fit is to emulate the HTTP-PULL & HTTP-POLL mechanisms of HTTP-OTA. Hence, the invention is to create a UDP-OTA gateway that bridges existing HTTP-OTA infrastructure to the NB-IoT UDP transport by emulating an HTTP-OTA applet, and for a UDP-OTA SIM application that performs the equivalent APDU commands that is requested by the application server. E.g. update PLMN file etc.

A SIM card in general comprises configuration data, which allows the mobile phone or in general the mobile end device to establish a connection with a network operator. Consequently, such profiles are stored on the SIM card along with further instructions. From time to time it is necessary to update such configuration data and perform profile management and profile provisioning, respectively. This results in the requirement to perform an update session of configuration data stored on the SIM card. The SIM card as such may be integrated or not leading to a specification according to either eUICC or UICC. Summarizing this issue, the SIM card as such may be integrated and embedded in the user equipment or not. The suggested method aims at the update of a SIM card integrated in a so-called Narrow Band Internet of Things device NB-IoT. This is a specific restriction regarding the user equipment as such Internet of Things devices typically do not comprise the same hardware and software resources as in case the user equipment is provided by means of a smartphone.

An update session refers to any data exchange performed in the context of exchanging or amending configuration data on the Internet of Things device, especially on the SIM card. This might comprise the establishment of a communication channel, which can be established in the context of the update session.

Establishing a communication channel between a configuration data-providing entity and the SIM card typically requires that the SIM card is inserted or embedded into the NB-IoT device and consequently the interface of such a device is used. The configuration data-providing entity may be a server which is connected indirectly with the SIM card over a network. Such a network may involve the internet and especially may involve a radio telecommunications network as the update is performed over the air. Over the air typically means wireless.

The data exchange regarding the update of the configuration data is performed using the established communication channel in the context of the update session. Finally, the update session comprises at least instructions directed towards the data exchange and moreover may comprise instructions directed towards the establishment of the communication channel. The data exchange as such can be performed by providing the new configuration data, which is meant to update the data stored on the SIM card. The configuration data, which is to be established on the SIM card is provided by the configuration data-providing entity such as a server storing the configuration data in a newer version as the one stored on the SIM card. Consequently, the configuration data-providing entity provides instructions and parameters designed to configure the SIM card. The configuration data-providing entity contains information about which instructions and parameters are to be exchanged or amended on the SIM card. The configuration data-providing entity likewise transmits the newer version of such data to the SIM card which then implements the update. Such a procedure is typically performed considering several SIM cards and the update is distributed over a network. In this way a huge number of users can be provided with an updated configuration.

It is of advantage that the communication channel is operated according to the User Datagram Protocol UDP and consequently, known techniques such as a Short Message Service are avoided. The User Datagram Protocol may rely on the Internet Protocol IP and transmits packets such as datagrams over the network. Typically UDP uses a simple connectionless communication model with a minimum of protocol mechanisms. The usage of such a protocol implies further substeps such as the provisioning of checksums. Further techniques being provided in the context of the User Datagram Protocol can likewise be implemented. In the present application scenario, the NB-IoT device does not provide any voice services and consequently, a lightweight device can be provided being very efficient regarding hardware requirements and software requirements.

According to an aspect of the present invention, the SIM card is an MSISDN-less SIM card. This provides the advantage that specific parameters do not have to be provided and moreover in specific application scenarios an MSISDN is not supported. Consequently, in case such an MSISDN is not supported, the suggested method can likewise be applied as it uses MSISDN-less SIM cards able to perform data communications using the User Datagram Protocol UDP.

According to a further aspect of the present invention, the SIM card is addressed using an interface provided by an NB-IoT device acting as user equipment. This provides the advantage that no restrictions have to be made regarding the underlying application scenario as such Narrow Band Internet of Things devices typically do not support voice transmission and consequently, there is no need to perform other data communications than the ones suggested. Especially, this is a very efficient way of establishing data communication as no additional interfaces are required, which may not be supported. The SIM card as such is addressed, meaning read out and written, using an interface of the user equipment. Such interfaces are typically already implemented and consequently, the SIM card is not directly addressed but the user equipment is integrated in a telecommunications network and performs data communication for the SIM card.

According to a further aspect of the present invention, the communication channel comprises an over-the-air path. This provides the advantage that the communication link between the configuration data-providing entity and the SIM card may comprise wired connection links such as the ones implemented in the core network and moreover radio telecommunications networks may be used. Typically, a telecommunications network comprises wired and wireless communication links.

According to a further aspect of the present invention, the configuration data comprises control instructions and/ or static data. This provides the advantage that instructions required to perform specific operations as well as static parameters can be amended and updated. Specific control instructions may be stored on the SIM card which may be required regarding the establishment of a connection and further parameters may likewise be stored on the SIM card. The configuration data can be exchanged as a whole or in part and comprises at least one of control instructions and static data. Static data or parameters may likewise comprise negotiated parameters of previous sessions.

According to a further aspect of the present invention, performing data exchanges comprises and execution of an HTTP instruction. This provides the advantage that infrastructures relying on HTTP can be reused and specific operations of such protocols are implemented using the User Datagram Protocol UDP. In this way the suggested method can be integrated in already existing frameworks.

According to a further aspect of the present invention, performing data exchange comprises an execution of an HTTP pull or HTTP poll mechanism.

This provides the advantage that specific HTTP requests can be emulated using the suggested UDP mechanism, and accordingly, the method can be applied on both communication sides, namely the sender and the receiver. By supporting the HTTP mechanisms, the suggested method can be integrated in existing frameworks without any requirement for further adaptations. Although the HTTP instructions are not directly supported they can be emulated and consequently, HTTP support is established by emulating such commands.

According to a further aspect of the present invention, HTTP instructions are emulated. This provides the advantage that initiating an updated session, establishing a communication channel and/ or performing data exchange can be performed using the HTTP mechanisms without the requirement for further adaptations.

According to a further aspect of the present invention, the configuration data comprises a PLMN file. This provides the advantage that so-called Public Land Mobile Network PLMN files can be supported, which merely gives an example of configuration data to be handled. Consequently, the present invention is not restricted to such files.

According to a further aspect of the present invention, performing data exchange comprises transmitting APDU commands. This provides the advantage that an existing protocol stack is supported and existing architectures can be reused. The UDP can be implemented on top of a stack, just to give an example, and may communicate with layers below such a newly introduced layer.

According to a further aspect of the present invention, establishing the communication channel comprises operating a UDP-OTA gateway. This provides the advantage that a specific unit, may it be physically or virtually, can be created and accordingly, the data communication and especially data type conversions can be performed by such a gateway. Hence, an interface is provided able to establish UDP communication.

According to a further aspect of the present invention, initiating the update session is performed by the NB-IoT device. This provides the advantage that the device itself can request updates in case this is necessary and furthermore in case a quality communication link is established.

According to a further aspect of the present invention, interfaces are provided for communication with existing infrastructures. This provides the advantage that the suggested method can be integrated in existing frameworks seamlessly and consequently, no adaptations are required regarding existing protocols. In this way, specific parts can be left out such as the MSISDN and hardware and software resources are not required anymore. Especially, the assignment of the MSISDN is costly and consequently, such technical effort is avoided according to the present invention.

The object is also solved by a communication system for updating SIM card settings of an NB-IoT device remotely over-the-air, comprising an initiation unit arranged to initiate an update session for configuration data stored on the SIM card, an interface unit arranged to establish a communication channel between a configuration data-providing entity and the SIM card, an update unit arranged to perform data exchange between the SIM card and the configuration data-providing entity for updating the configuration data over the established communication channel, wherein the communication channel is operated according to a User Datagram Protocol UDP.

The skilled person recognizes that further components may be required, especially for establishing the communication channel. The suggested units may be implemented in the user equipment or on the network side. Moreover, they may be distributed over the telecommunications network.

The object is also solved by a computer program product comprising instructions implementing the method steps and able to operate the suggested system.

According to the present invention, it is an advantage of the method that it provides method steps, which provide functionality likewise to be provided by the units of the suggested system. Consequently, the suggested system comprises structural features which provide functionality in accordance with the method steps.

Further advantages of the present invention will be demonstrated in the context of the accompanying figures, which show:
- Fig. 1:: an NB-IoT architecture according to the known art as a starting point towards the present invention;
- Fig. 2:: an architecture implementing NB-IoT OTA using Short Message Services according to the known art;
- Fig. 3:: an architecture using the User Datagram Protocol according to an aspect of the present invention;
- Fig. 4:: a protocol stack able to implement data exchange using the User Datagram Protocol according to a further aspect of the present invention;
- Fig. 5:: a system for updating SIM card settings according to an aspect of the present invention;
- Fig. 6:: a sequence diagram showing the communication flow of the suggested method according to an aspect of the present invention; and
- Fig. 7:: a flowchart depicting an aspect of the method for updating SIM card settings according to the present invention.

In the accompanying figures, abbreviations are used which are to be understood in accordance with commonly recognized standards and architectures. Such abbreviations include Packet Data Network PDN, which is a generic description for a network that provides data services. ENB stands for Evolved Node B, also referred to eNodeB, which is commonly known in the context of LTE. CSGN stands for CIoT Serving Gateway Node. SMSC is the abbreviation for Short Message Service Center. SCF abbreviates Service Capability Exposure Function. PLMN abbreviates Public Land Mobile Network, which is a network that is established and operated by an administration or by a recognized operating agency for the specific purpose of providing land mobile telecommunications services to the public. In general, regarding such abbreviations the skilled person familiar with telecommunications network will properly understand such definitions as they are in conformance with common knowledge. MSISDN abbreviates Mobile Subscriber Integrated Services Digital Network number.

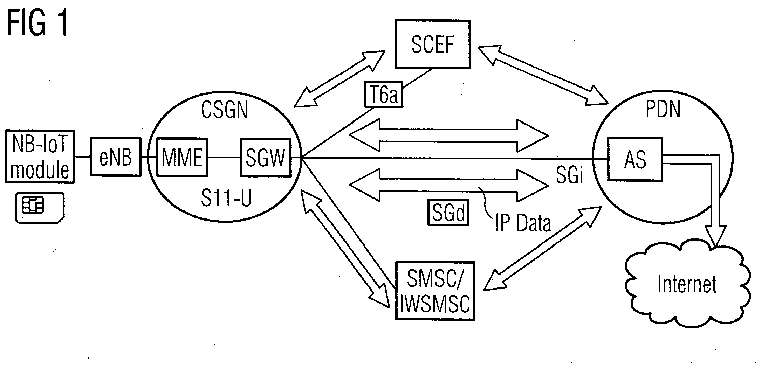

Fig. 1 shows a NB-IoT architecture as commonly known serving as starting point towards the suggested invention. On the left side the SIM card is depicted in the form of a NB-IoT module. The configuration data may be provide over the internet as shown on the right side. In between there is an architecture which serves for establishing a data communication link between the SIM card on the left side and the internet of the right side for updating configuration data.

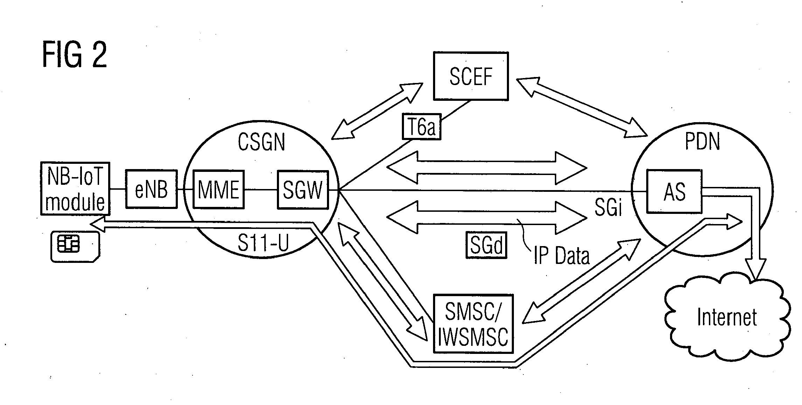

Fig. 2 refers to the architecture as depicted in Fig. 1 and demonstrates that according to known methods, data communication in the underlying application scenario is performed using Short Message Services SMS indicated by the arrow in the lower portion of Fig. 2. Such a communication flow is to be avoided since Short Message Services rely on MSISDN. In general, such data communication shall be kept up but shall be accomplished using different means not requiring MSISDN.

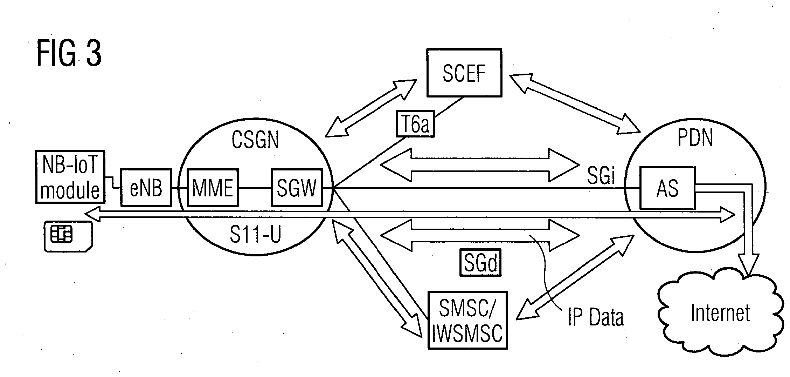

Fig. 3 shows a data communication link according to the present invention. As can be seen in the lower part of Fig. 3, Short Message Services are no longer used but the data communication is provided using Internet Protocol data and especially using User Datagram Protocol UDP mechanisms. In this way, a novel communication link can be established which does not require MSISDN. The inventors found out that such a communication flow can be performed as the NB-IoT module does not need to support voice data transmission.

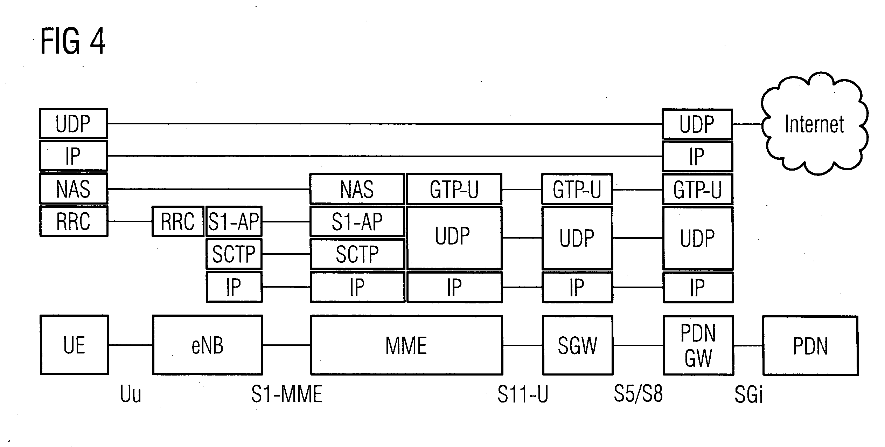

Fig. 4 shows a protocol stack and especially the NB-IoT components according to the present invention. As can be seen in the top layer, User Datagram Protocol is used which communicates with both sides, namely the user equipment UE on the left side and the PDN on the right side. PDN abbreviates Public Data Network. As can be seen in Fig. 4, the communication and especially the update procedure can be performed using User Datagram Protocol UDP.

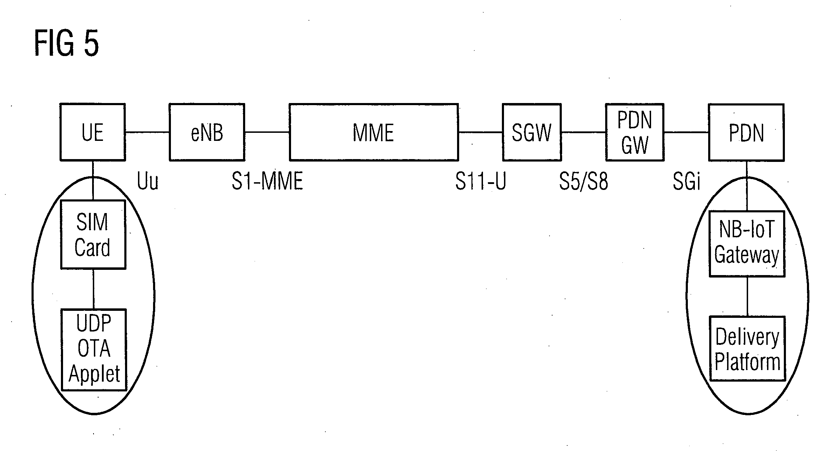

Fig. 5 shows NB-IoT over-the-air services using the User Datagram Protocol UDP. On the left side the SIM card is depicted which is connected to a UDP OTA applet. In this way emulation can be performed in the user equipment UE. On the right side the NB-IoT gateway is depicted with the delivery platform. The delivery platform may provide the configuration data, among other things.

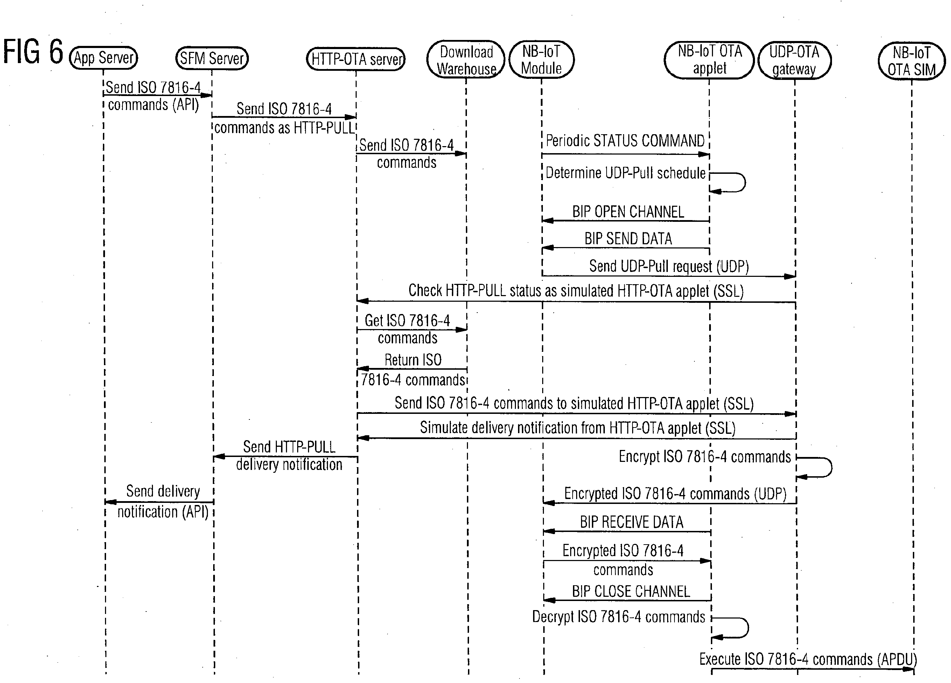

Fig. 6 shows a sequence diagram involving further entities such as specific servers or applets. The communication flow according to the suggested method is depicted by the respective arrows. Establishing a communication channel might involve further substeps such as performing encryption and decryption, for instance using SSL. Further ISO standards may likewise be used and accordingly, the present invention can be integrated into existing frameworks. The first command on the left side and the last command on the right side show that commonly known commands may be involved starting the procedure and ending the procedure and accordingly, respective interfaces of commonly known standards can be used.

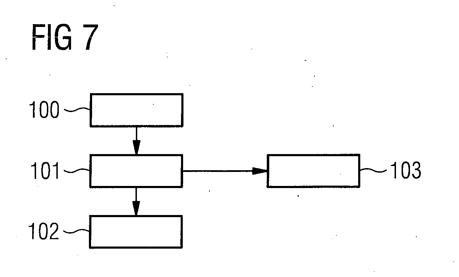

Fig. 7 shows a flowchart depicting a method for updating SIM card settings of an NB-IoT devices remotely over the air, comprising the steps of initiating 100 an update session for configuration data stored on the SIM card, establishing 101 a communication channel between a configuration data-providing entity and the SIM card, performing 102 data exchange between the SIM card and the configuration data-providing entity for updating the configuration data over the established 100 communication channel, wherein the communication channel is operated 103 according to a User Datagram Protocol UDP.

The person skilled in the art recognizes that communication using the User Datagram Protocol UDP can be performed in parallel with any step, especially step 100, 101 and 102. Consequently, the control flow as depicted by Fig. 7 is merely provided by way of example.

## Claims

1. A method for updating SIM card settings of a Narrow Band Internet of Things device, acting as user equipment, UE, remotely over the air from a configuration data-providing entity, comprising the steps performed by said Narrow Band Internet of Things device:
- initiating an update session for configuration data stored on the SIM card;
- establishing a communication channel between a configuration data-providing entity and the SIM card;
- performing data exchange between the SIM card and the configuration data-providing entity for updating the configuration data over the established communication channel, **characterized in that**
- the communication channel is operated according to a User Datagram Protocol, UDP,
whereby the SIM card is an MSISDN-less SIM card,
whereby the SIM card is read out and written by the configuration data-providing entity using an interface provided by said Narrow Band Internet of Things device.

2. The method according to any one of the preceding claims, wherein the communication channel comprises an over-the-air path.

3. The method according to any one of the preceding claims, wherein the configuration data comprises control instructions and/ or static data.

4. The method according to any one of the preceding wherein performing data exchange comprises an execution of a HTTP instruction.

5. The method according to any one of the preceding claims, wherein performing data exchange comprises an execution of a HTTP pull and/ or HTTP poll mechanism.

6. The method according to any one of claims 4 or 5, wherein HTTP instructions are emulated.

7. The method according to any one of the preceding claims, wherein the configuration data comprises a PLMN file.

8. The method according to any one of the preceding claims, wherein performing data exchange comprises transmitting Application Protocol Data Unit, APDU, commands.

9. The method according to any one of the preceding claims, wherein establishing the communication channel comprises operating an User Data Program - Over The Air, UDP-OTA gateway.

## Patentansprüche

1. Verfahren zum Updaten von SIM-Karteneinstellungen einer Schmalband-Internet-of-Things-Vorrichtung, welche als Nutzerequipment (User Equipment, UE) agiert, von Ferne über den Äther von einer Einheit aus, welche Konfigurationsdaten zur Verfügung stellt, umfassend die von der Schmalband-Internet-of-Things-Vorrichtung durchgeführten Schritte:
- Initiieren einer Updatesession zum Konfigurieren von Daten, die auf der SIM-Karte gespeichert sind;
- Errichten eines Kommunikationskanals zwischen einer Einheit, die Konfigurationsdaten zur Verfügung stellt, und der SIM-Karte;
- Durchführen eines Datenaustauschs zwischen der SIM-Karte und der Einheit, welche Konfigurationsdaten zur Verfügung stellt, zum Updaten der Konfigurationsdaten über den errichteten Kommunikationskanal, **dadurch gekennzeichnet, dass**
- der Kommunikationskanal gemäß einem User Datagram Protocol, UDP, betrieben wird,
wobei die SIM-Karte eine MSISDN-lose SIM-Karte ist,
wobei die SIM-Karte ausgelesen und beschrieben wird durch die Einheit, welche Konfigurationsdaten zur Verfügung stellt, unter Verwendung einer Schnittstelle, die durch die Schmalband-Internet-of-Things-Vorrichtung zur Verfügung gestellt wird.

2. Verfahren gemäß einem der vorhergehenden Ansprüche, wobei der Kommunikationskanal einen Over-The-Air Pfad umfasst.

3. Verfahren gemäß einem der vorhergehenden Ansprüche, wobei die Konfigurationsdaten Kontrollanweisungen und/oder statische Daten umfassen.

4. Verfahren gemäß einem der vorhergehenden Ansprüche, wobei das Durchführen eines Datenaustauschs eine Ausführung einer HTTP-Anweisung umfasst.

5. Verfahren gemäß einem der vorhergehenden Ansprüche, wobei das Durchführen eines Datenaustauschs eine Ausführung eines HTTP-pull- und/oder HTTP-poll-Mechanismus umfasst.

6. Verfahren gemäß einem der Ansprüche 4 oder 5, wobei HTTP-Anweisungen emuliert werden.

7. Verfahren gemäß einem der vorhergehenden Ansprüche, wobei die Konfigurationsdaten eine PLMN-Datei umfassen.

8. Verfahren gemäß einem der vorhergehenden Ansprüche, wobei das Durchführen eines Datenaustauschs ein Übermitteln von Application Protocol Data Unit, APDU Befehlen, umfasst.

9. Verfahren gemäß einem der vorhergehenden Ansprüche, wobei das Errichten des Kommunikationskanals den Betrieb eines User Data Program - Over The Air, UDP-OTA, Gateways umfasst.

## Revendications

1. Procédé destiné à mettre à jour les paramètres de carte SIM d'un dispositif Internet des objets (Internet of Things, IoT) à bande étroite, agissant comme équipement utilisateur (User Equipement, UE) à distance par liaison radio (Over The Air, OTA) à partir d'une entité de fourniture de données de configuration, comprenant les étapes réalisées par ledit dispositif IoT à bande étroite pour :
- lancer une session de mise à jour pour des données de configuration stockées sur la carte SIM ;
- établir un canal de communication entre une entité de fourniture de données de configuration et la carte SIM ;
- réaliser un échange de données entre la carte SIM et l'entité de fourniture de données de configuration pour mettre à jour les données de configuration via le canal de configuration établi, **caractérisé en ce que**
- le canal de communication fonctionne conformément à un protocole de datagramme utilisateur (User Datagram Protocol, UDP),
attendu que la carte SIM est une carte SIM MSISDN-less ;
attendu que la carte SIM est lue et écrite par l'entité de fourniture de données de configuration à l'aide d'une interface fournie par ledit dispositif IoT à bande étroite.

2. Procédé selon l'une quelconque des revendications précédentes,
dans lequel le canal de communication est un trajet par liaison radio.

3. Procédé selon l'une quelconque des revendications précédentes,
dans lequel les données de configuration comprennent des instructions de commande et/ou des données fixes.

4. Procédé selon l'une quelconque des revendications précédentes,
dans lequel la réalisation de l'échange de données comprend une exécution d'une instruction HTTP.

5. Procédé selon l'une quelconque des revendications précédentes,
dans lequel la réalisation de l'échange de données comprend une exécution d'un mécanisme HTTP pull et/ou HTTP poll.

6. Procédé selon l'une quelconque des revendications précédentes,
dans lequel les instructions HTTP sont émulées.

7. Procédé selon l'une quelconque des revendications précédentes,
dans lequel les données de configuration comprennent un fichier PLMN.

8. Procédé selon l'une quelconque des revendications précédentes,
dans lequel la réalisation de l'échange de données comprend la transmission de commandes d'unité de données de protocole d'application (Application Protocol Data Unit, APDU).

9. Procédé selon l'une quelconque des revendications précédentes,
dans lequel l'établissement du canal de communication comprend le fonctionnement d'une passerelle UDP-OTA (User Data Program - Over The Air).
